# EUROPÄISCHE PATENTSCHRIFT

(11) **EP 3 087 822 B1**
(45) Veröffentlichungstag und Bekanntmachung des Hinweises auf die Patenterteilung: **07.03.2018**
(21) Anmeldenummer: 16000889.2
(22) Anmeldetag: 20.04.2016
(51) Int. Cl.: A01D 78/00, A01D 80/02, A01D 78/10

(54) **HEUWERBUNGSMASCHINE**
HAYMAKING MACHINE
FANEUSE

(30) Priorität: 28.04.2015 DE 102015005347
(43) Veröffentlichungstag der Anmeldung: 02.11.2016
(73) Patentinhaber: Maschinenfabrik Bernard Krone GmbH & Co. KG, 48480 Spelle (DE)
(72) Erfinder: Afting, Andreas, 48488 Emsbüren (DE); Helper, Erik, 48465 Quendorf (DE); Leifeling, Karl, 48477 Hörstel (DE); Weber, Mathias, 49124 Georgsmarienhütte (DE)

(56) Entgegenhaltungen:
- AT-B- 304 126
- CH-A- 450 792
- DE-B- 1 161 449
- DE-U- 6 908 109
- FR-A- 1 594 697

## Beschreibung

Die Erfindung betrifft eine Heuwerbungsmaschine zum Zetten und Wenden von landwirtschaftlichem Halm- oder Blattgut nach dem Oberbegriff des Patentanspruches 1. Derartige Heuwerbungsmaschinen sind aus dem Stand der Technik in verschiedenen Ausführungsformen bekannt und dienen dazu, den Trockungsvorgang von auf einer Feld- oder Wiesenfläche liegendem, landwirtschaftlichen Halm- und Blattgut zu unterstützen bzw. zu beschleunigen. Das Zetten oder Wenden von landwirtschaftlichem Halm- oder Blattgut erfolgt dabei durch rotierend umlaufend angetriebene Zettkreisel, die mit sich zum Erdboden erstreckenden Federzinken an der in Bezug zur Fahrtrichtung vorderen Seite der Zettkreisel das Erntegut vom Erdboden aufnehmen und es an der Hinterseite der Zettkreisel wieder auf dem Erdboden ablegen. Die feuchte Unterseite des Erntegutes gelangt dadurch zumindest teilweise nach oben und kann schneller abtrocknen. Die Qualität einer solchen Zett- oder Wendetätigkeit hängt daher maßgeblich davon ab, wie gut der Aufnahmevorgang des Erntegutes vom Erdboden durch die Federzinken der Zettkreisel sowie der anschließende Abgabevorgang zurück auf den Erdboden ausgeführt wird. Insbesondere beim Aufnahmevorgang des Erntegutes vom Erdboden wird dabei vorgegeben, in welchem Maße mit dem Erntegut auch Erdpartikel mit aufgenommen werden und somit die Verschmutzung des Erntegutes beeinflusst wird.

Aus der DE 299 12 957 U1 ist eine Heuwerbungsmaschine zum Zetten und Wenden von am Boden liegendem Erntegut bekannt geworden, deren Zettwerkzeuge mit sich zum Boden hin erstreckenden Zinkenelementen ausgerüstet sind, wobei die dem Erdboden zugewandten Enden der beiden Zinkenteile der Zinkenelemente hakenförmig in Umlaufrichtung abgebogen sind. Weiterhin wird hier offenbart, dass die dem Erdboden zugewandten Enden der beiden Zinkenteile der Zinkenelemente gegenüber ihrer Anbringungsstelle an den Zinkenarmen der Zettkreisel vorlaufend an den Zinkenarmen angebracht sind. Dadurch ergibt sich bei der Beanspruchung der federnd nachgiebigen Zinkenelemente ein Einstechen in den Erdboden. Die Verschmutzungsgefahr des Erntegutes bei der Aufnahme des Erntegutes vom Erdboden steigt damit deutlich an. Ein weiterer Mangel der offenbarten Zinkenelemente ist darin zu sehen, dass die Zinkenteile der Zinkenelemente, in Umlaufrichtung gesehen, Im Wesentlichen geradlinig ausgebildet sind, so dass eine zuverlässige Führung des Erntegutes während des rotierenden Umlaufes der Zinkenelemente nicht gegeben ist. Eine deutliche Verschmutzung der Zettkreisel durch Ernteguthalme, die sich in den schraubenfederförmigen Windungstellen der Zinkenelemente festsetzen, ist die Folge.

Die DE 69 08 109 U zeigt und beschreibt einen Rechkörper für eine Heuwerbungsmaschine zum seitlichen Zusammenrechen von auf dem Boden liegendem Erntegut, wobei der Rechkörper aus etwa radial angeordneten Zinkenträgern gebildet ist, an denen an ihren freien Enden Federzinken angebracht sind. Bei der Recharbeit erstrecken sich die Federzinken ausgehend von den freien Enden der Zinkenträger nach unten zum Erdboden und bilden so eine Mitnehmerfläche für das auf dem Erdboden liegende Erntegut. Dadurch dass die Federzinken an ihren Zinkenspitzen einen Winkel mit dem Erdboden bilden, der größer als 90 ° ist, können diese Federzinken die Anforderungen an eine vollständige Aufnahme des Erntegutes vom Erdboden zwar erfüllen, eine gleichmäßige und ungestörte Abgabe des Erntegutes ist mit dieser Zinkenform dagegen nicht erreichbar.

Mit der DE 11 61 449 B wird ein, um eine etwa vertikale Achse umlaufendes, angetriebenes Rechrad zur Verwendung an Heuwerbungsmaschinen vorgestellt. Auch hier wird wiederum darauf abgestellt, dass speziell gestaltete Federzinken sowohl zum Zusammenrechen als auch für die Zett- und Wendearbelt einsetzbar sind. Dazu sind die Federzinken derart geknickt gestaltet, dass die zum Erdboden zeigenden Zinkenspitzen in radialer Richtung nach außen gerichtet sind. Aus der Praxis ist es in diesem Zusammenhang allerdings bekannt, dass Insbesondere im Bereich des Knicks die Ernteguthalme dazu neigen, dass sie sich um den Zinkenschaft wickeln und damit die gleichmäßige Abgabe beim Zetten und Wenden deutlich erschweren bzw. unmöglich maschen.

Aufgabe der Erfindung ist es daher, eine Heuwerbungsmaschine zum Zetten und Wenden von landwirtschaftlichem Halm- und Blattgut berelt zu stellen, bei der die aufgeführten Mängel dadurch vermieden werden, dass der Fördervorgang der Federzinken durch eine Optimierung der Zinkenform verbessert ist.

Diese Aufgabe wird erfindungsgemäß durch eine Heuwerbungsmaschine mit den kennzeichnenden Merkmalen des Patentanspruchs 1 gelöst, wobei die Merkmale der weiteren Patentansprüche die Lösung in vorteilhafter Weise weiterentwickeln.

Gemäß der Erfindung wird eine Heuwerbungsmaschine zum Zetten und Wenden von landwirtschaftlichem Halm- oder Blattgut mit zumindest zwei, an einem in der Arbeits- und Betriebsstellung im Wesentlichen quer zur Fahrt- und Arbeitsrichtung ausgerichteten Maschinenbalken angeordneten Zettkreiseln vorgeschlagen, welche um eine in der Arbeits- und Betriebsstellung unter einem vorbestimmten Winkel zur Vertikalen in Fahrt- und Arbeitsrichtung geneigten Achse umlaufend angetrieben und mit einer Mehrzahl von zumindest in etwa radial ausgerichteten Zinkenarmen versehen sind, wobei die äußeren Enden der Zinkenarme mit Federzinken bestückt sind und jeder Federzinken aus einem, dem äußeren Ende der Zinkenarme räumlich zugeordneten, federnd nachgiebigen Befestigungsabschnitt sowie aus einem der Bearbeitung des landwirtschaftlichen Halm- oder Blattgutes dienenden, zwei längliche, sich in der Arbeits- und Betriebsstellung der Zettkreisel zum Erdboden erstreckende Federstangenelemente aufweisenden Bearbeitungsabschnitt besteht, wobei die beiden länglichen Federstangenelemente bei einer Betrachtung der Federzinken, in der der Federzinken in einer vertikalen Projektionsebene in einer radial auf den Zettkreisel ausgerichteten Blickrichtung gezeigt ist, eine bogenförmige Kontur mit zumindest annähernd gleicher Formgebung aufweisen, wobei ein dem Erdboden zugewandtes Ende der länglichen Federstangenelemente in Bezug zur Umlaufrichtung der Federzinken und einer durch einen Mittelpunkt der Querschnittsfläche des Zinkenarmes führenden, vertikalen Bezugslinie mit einem Schnittpunkt dieser Bezugslinie mit dem Erdboden zusammenfällt oder diesem nachgeordnet ist und wobei die bogenförmige Kontur der länglichen Federstangenelemente in radialer Ausrichtung des umlaufenden Federzinkens aus zwei geometrisch gestalteten Konturabschnitten besteht, wobei der dem Erdboden zugewandte Konturabschnitt als Bogenelement mit radiusförmiger Krümmung und der dem federnd nachgiebigen Befestigungsabschnitt des Federzinkens zugewandte Konturabschnitt als geradlinig ausgebildetes Element ausgeführt ist.

Die erfindungsgemäße Heuwerbungsmaschine zeichnet sich durch Federzinken an den Zettkreiseln aus, bei denen als Bearbeitungsabschnitt für das Erntegut länglich gestaltete Federstangenelemente mit einer bogenförmigen Kontur vorgesehen sind, die sich in einer Arbeits- und Betriebsstellung der Zettkreisel von den Zinkenarmen bis zum Erdboden erstrecken. In vorteilhafter Weise haben beide länglichen Federstangenelemente eines Federzinkens dabei eine zumindest annähernd gleiche Formgebung. Das bedeutet, dass die Federzinken ausgehend von einem Befestigungsabschnitt zur Befestigung an den äußeren Enden der Zinkenarme eines Zettkreisel aus länglichen Federstangenelementen gebildet sind, die eine konkave und in Umlaufrichtung der Federzinken zeigende Kontaktfläche mit dem Erntegut aufweisen. Erfindungsgemäß sind dabei die dem Erdboden zugewandten Enden der länglichen Federstangenelemente in der Arbeits- und Betriebsstellung derart ausgerichtet bzw. angeordnet, dass bei einer Betrachtung eines Federzinkens in einer vertikalen Projektionsebene mit einer radial auf den Zettkreisel gerichteten Blickrichtung das untere Ende eines länglichen Federstangenelementes auf einem Schnittpunkt einer durch einen Mittelpunkt der Querschnittsfläche der Zinkenarme führenden, vertikalen Bezugslinie mit den Erdboden auskommt oder diesem Schnittpunkt bezüglich der Umlaufrichtung der Federzinken nachgeordnet ist. Durch diese Anordnung des unteren Endes der länglichen Federstangenelemente bei der Gestaltung einer vorteilhaften Zinkenform ist sichergestellt, dass der Abstand des unteren Endes der länglichen Federstangenelemente zum Erdboden auch bei zunehmender Beanspruchung durch größere, zu bewegende Erntegutmengen niemals kleiner wird. Desweiteren ergibt sich aus dieser vorteilhaften Gestaltung der länglichen Federstangenelemente, dass durch die in Umlaufrichtung der Federzinken zeigende, konkave Kontaktfläche der bogenförmigen Kontur der länglichen Federstangenelemente mit dem Erntegut immer optimale Aufnahmeeigenschaften der Federzinken vorliegen. Insbesondere durch die Gestaltung des dem Erdboden zugewandten Konturabschnitts der länglichen Federstangenelemente, der einen Winkel α mit der vertikalen Bezugslinie einschließt, wird das aufgenommene Erntegut sofort nach oben geführt und verlässt somit sehr schnell den Erdbodenbereich, wodurch eine weitere Futterverschmutzung vermieden wird. Zudem erbringt die konkave, in Umlaufrichtung der Federzinken zeigende Kontaktfläche der bogenförmigen Kontur der länglichen Federstangenelemente eine zuverlässige Führung des Erntegutes beim rotierenden Umlauf der Zettkreisel, so dass damit ein Hochrutschen des Erntegutes bis in den Bereich des Befestigungsabschnittes der Federzinken sicher vermieden wird. Die Verschmutzungsgefahr der Zettkreisel, insbesondere durch Festklemmen von einzelnen Ernteguthalmen oder Erntegutbündeln im Bereich der Befestigungsabschnitte der Federzinken an den Zettkreisel ist damit deutlich herabgesetzt.

Im Hinblick auf eine vorteilhafte konstruktive Ausbildung der Erfindung weisen die länglichen Federstangenelemente eine Gestaltung auf, bei der die bogenförmige Kontur mit der vertikalen Bezugslinie durch den Mittelpunkt der Querschnittsfläche eines Zinkenarmes in seinem dem Erdboden zugewandten Konturabschnitt einen Winkel α einschließt, der sich in einem Bereich von 3° bis 45° bewegen kann und vorzugsweise einen Wert von 10° bis 30° annimmt. Ein entsprechender Winkel β in dem, dem Befestigungsabschnitt der Federzinken zugewandten Konturabschnitt liegt vorzugsweise in einem Bereich oberhalb von 90° und bewegt sich vorzugsweise zwischen 135° und 170°. In einer vorteilhaften Ausführungsform ist sowohl der dem Erdboden zugewandte Konturabschnitt als auch der dem Befestigungsabschnitt der Federzinken zugewandte Konturabschnitt als geradlinig geformtes, geometrisches Element ausgebildet, während der diese beiden Konturabschnitte verbindende dritte Konturabschnitt als ein geometrisches Bogenelement mit radiusförmiger Krümmung ausgebildet ist. Diese Ausführungsform erfordert in der Herstellung lediglich einen geringen konstruktiven Aufwand und stellt damit eine kostengünstige Herstellung der erfindungsgemäßen Heuwerbungsmaschine sicher. In einer weiteren denkbaren Ausführungsform der Erfindung ist es dagegen auch vorstellbar, die bogenförmige Kontur der länglichen Federstangenelemente aus einem geometrischen Konturabschnitt herzustellen, dessen Krümmung lediglich aus einem einzigen Radius besteht.

In Weiterbildung der Erfindung ist es auch denkbar, dass die länglichen Federstangenelemente in Verbindung mit der in Umlaufrichtung der Federzinken gerichteten, bogenförmigen Kontur auch eine bezüglich der Umlaufrichtung der Federzinken radial nach außen gerichtete Ausformung aufweisen. Diese radial nach außen gerichtete Ausformung überlagert dabei die in Umlaufrichtung der Federzinken gerichtete, bogenförmige Kontur. Aus dieser Weiterbildung ergibt sich, dass beim Zett- oder Wendevorgang der Heuwerbungsmaschine an der Vorderseite des Zettkreisels aufgenommenes Erntegut an der Hinterseite des Zettkreisels leichter wieder abgegeben werden kann. Bekanntermaßen rotieren die Zettkreisel beim Zett- oder Wendevorgang mit relativ hoher Drehzahl. Daraus lassen sich relativ kurze Zeitabschnitte sowohl für die Aufnahme des Erntegutes an der Vorderseite des Zettkreisels als auch für die anschließende Abgabe an der Hinterseite des Zettkreisels ableiten, so dass mit jeder Erleichterung oder Verbesserung des Aufnahme- oder Abgabevorganges eine Verbesserung des Arbeitsergebnisses der Heuwerbungsmaschine einhergeht.

Nachfolgend wird ein vorteilhaftes Ausführungsbeispiel der Erfindung anhand einer Zeichnung beschrieben. In der Zeichnung zeigt:
- Fig. 1:: eine perspektivische Ansicht einer Heuwerbungsmaschine nach der Erfindung, bei der jedoch die in Fahrtrichtung linke Maschinenseite nur abgebrochen dargestellt ist;
- Fig. 2:: eine perspektivische Ansicht eines Zettkreisels der Heuwerbungsmaschine nach Fig. 1, bei der jedoch aus Gründen einer verbesserten Übersichtlichkeit eine Antriebsanordnung mit Stützrad für den Zettkreisel nicht dargestellt ist;
- Fig. 3:: einen abgebrochen dargestellten Zinkenarm eines Zettkreisels nach Fig. 2 in einer vertikalen Projektionsebene in einer radial auf den Zettkreisel gerichteten Blickrichtung;
- Fig. 4:: einen abgebrochen dargestellten Zinkenarm eines Zettkreisel nach Fig. 2 in einer entgegengesetzt zur Umlaufrichtung U gerichteten Blickrichtung;

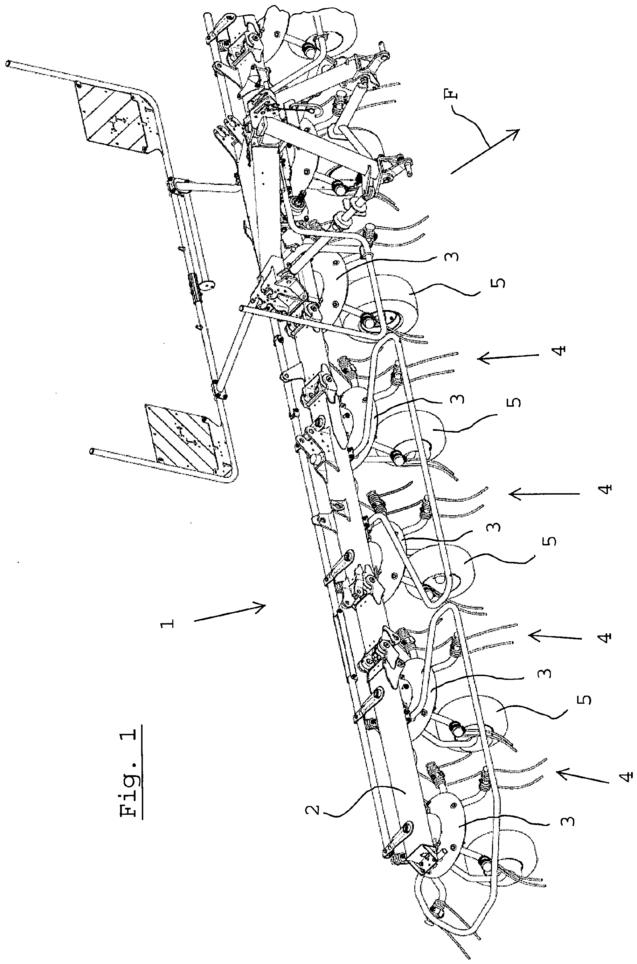

In der Fig. 1 ist eine, an eine Dreipunkthubeinrichtung eines landwirtschaftlichen Traktors oder dgl. Zug-und Antriebsmaschine anbringbare Heuwerbungsmaschine 1 zum Zetten und Wenden von landwirtschaftlichem Halm- oder Blattgut näher veranschaulicht, bei der an einem in einer Arbeits- und Betriebsstellung quer zur Fahrt- und Arbeitsrichtung F ausgerichteten Maschinenbalken 2 paarweise zusammenarbeitende Zettkreisel 3 angeordnet sind. In der Arbeits- und Betriebsstellung der Heuwerbungsmaschine sind die Zettkreisel 3 dabei so ausgerichtet, dass sie um eine, unter einem vorbestimmten Winkel zur Vertikalen geneigten Achse umlaufend angetrieben werden können und mit Hilfe von Federzinken 4, die sich von den Zettkreiseln 3 zum Erdboden hin erstrecken, das Erntegut an der Vorderseite des mit einer Mehrzahl von Zettkreiseln 3 versehenen Maschinenbalkens 2 vom Erdboden aufnehmen und an der Hinterseite wieder auf dem Erdboden ablegen. Zur Abstützung gegenüber dem Erdboden ist unterhalb eines jeden Zettkreisels 3 ein Lauf- und Stützrad 5 angebracht. Die Erfindung ist jedoch keineswegs auf eine Heuwerbungsmaschine im Dreipunktanbau beschränkt. Ebenso kann der Erfindung auch eine gezogene Heuwerbungsmaschine zugrunde gelegt sein.

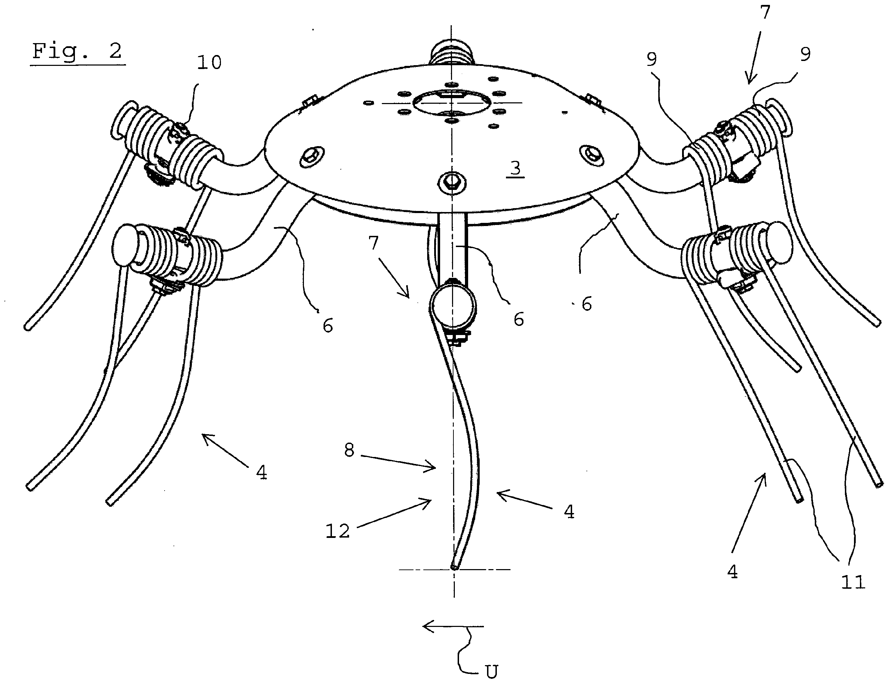

Aus Fig. 2 geht ein Zettkreisel 3 hervor, der mit zumindest in etwa radial ausgerichteten und nach außen sich über den äußeren Rand des Zettkreisels hinaus erstreckenden Zinkenarmen 6 versehen ist. An den äußeren Enden der Zinkenarme 6 sind diese mit Federzinken 4 versehen, die sich für den Zett- und Wendevorgang bis nahe an den Erdboden heran erstrecken. In dieser Darstellung ist der Zettkreisel 3 in der Arbeits- und Betriebsstellung gezeigt, in der dieser um eine, unter einem vorbestimmten Winkel zur Vertikalen geneigten Achse in Umlaufrichtung U umlaufend angetrieben den Zett- und Wendevorgang durchführt. Wie aus dieser Darstellung ebenfalls hervorgeht, bestehen die Federzinken 4 aus einem Befestigungsabschnitt 7 und einem Bearbeitungsabschnitt 8 zur Bearbeitung des landwirtschaftlichen Erntegutes. Als Befestigungsabschnitt 7 enthält das dargestellte Ausführungsbeispiel zwei schraubenfederförmige Windungsteile 9, zwischen denen eine Befestigungsschraube 10 zur Befestigung der Federzinken 4 an den äußeren Enden der Zinkenarme 6 eines jeden Zettkreisels 3 angeordnet ist. Gemäß einem zusätzlichen vorteilhaften Aspekt kann die Befestigung der Federzinken 4 an den Zinkenarmen 6 derart verstellbar ausgeführt sein, dass die Federzinken 4 im Hinblick auf ihre Ausrichtung zum Erdboden einstellbar sind. Im dargestellten Ausführungsbeispiel bedeutet das, dass die Federzinken 4 an den Enden der Zinkenarme 6 um diese rotierend verstell- bzw. einstellbar sind.

Aus der Fig. 2 geht weiterhin hervor, dass der Bearbeitungsabschnitt 8 der Federzinken 4 aus zwei, in radialer Richtung beabstandeten, länglichen Federstangenelementen 11 mit zumindest annähernd gleicher Formgebung gebildet sind. In Umlaufrichtung U weisen diese länglichen Federstangenelemente 11 eine bogenförmige Kontur 12 auf, die eine konkav ausgebildete und in Umlaufrichtung U der Federzinken 4 zeigende Kontaktfläche für das Erntegut enthält. Die beiden länglichen Federstangenelemente 11 mit ihrer bogenförmigen Kontur 12 bilden damit eine optimale Führung für das vom Erdboden aufgenommene Erntegut, da dieses unmittelbar nach der Aufnahme vom Erdboden bis in die konkav ausgeformte, bogenförmige Kontur 12 der länglichen Federstangenelemente rutscht und dort solange verharrt, bis das Erntegut nach dem Zett- oder Wendevorgang an der Hinterseite der Zettkreisel wieder auf den Erdboden abgegeben wird. Hierdurch wird eine Verschmutzung insbesondere der schraubenfederförmigen Windungsteile 9 der Federzinken 4 durch einzelne Halme wirkungsvoll vermieden.

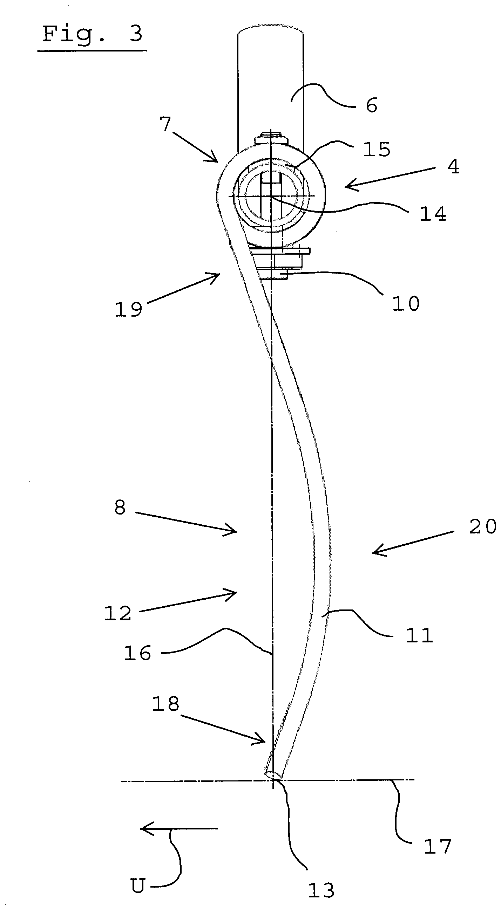

Die detaillierte Gestaltung der länglichen Federstangenelemente 11 mit der bogenförmigen Kontur 12 geht insbesondere aus der Fig. 3 hervor, in der der Federzinken 4 in einer vertikalen Projektionsebene mit einer radial auf den in Umlaufrichtung U umlaufend angetriebenen Federzinken 4 gezeigt ist. Aus dieser Darstellung wird deutlich, dass ein dem Erdboden zugewandtes Ende der länglichen Federstangenelemente 12 dabei auf eine Schnittpunkt 13 ausläuft oder diesem in Umlaufrichtung U nachgeordnet ist. Dieser Schnittpunkt 13 ergibt sich aus einer, durch einen Mittelpunkt 14 einer Querschnittsfläche 15 des Zinkenarmes 6 führenden vertikalen Bezugslinie 16 mit einer das Niveau des Erdbodens darstellenden horizontalen Bezugslinie 17. Damit ist das dem Erdboden zugewandte Ende der länglichen Federstangenelemente 12 unabhängig von der jeweiligen Beanspruchung durch das vom Erdboden aufzunehmende Erntegut so ausgerichtet, dass der Abstand zwischen dem Erdboden und dem, dem Erdboden zugewandten Ende der länglichen Federstangenelemente unter Beanspruchung nicht kleiner werden kann. Ein Einstechen der Federzinken 4 in den Erdboden ist damit wirkungsvoll vermieden.

In einer vorteilhaften Ausführungsform der Erfindung kann die bogenförmige Kontur 12, wie dies ebenfalls aus Fig. 3 deutlich wird, aus mehreren Konturabschnitten 18,19,20, bezogen auf die in Umlaufrichtung U zeigende, konkave Kontaktfläche bestehen. Diese Konturabschnitte 18,19,20 können dabei auf eine unterschiedliche geometrische Formgebung zurückgehen, so dass sich nach entsprechender Kombination eine Vielzahl an Gestaltungsmöglichkeiten der bogenförmigen Kontur 12 anbieten. Aus Fig. 3 wird ersichtlich, dass der Konturabschnitt 18 der länglichen Federstangenelemente 11 an dem, dem Erdboden zugewandten Ende mit der vertikalen Bezugslinie 16 einen Winkel α einschließen, der Werte zwischen 3° und 45° annehmen kann. Vorteilhaft bewegt sich der Winkel α zwischen 10° und 30°. In entsprechender Weise ist zwischen dem Konturabschnitt 19 der länglichen Federstangenelemente 11 und der vertikalen Bezugslinie 16 ein Winkel β ausgebildet, dessen Wert in einem Bereich oberhalb von 90° liegt. Vorteilhaft wird hier ein Wert von 135° bis 170° angestrebt. Die hier vorzugsweise als geradlinig gestaltete Konturabschnitte 18, 19 werden über einen weiteren Konturabschnitt 20 miteinander verbunden, der hier als geometrisches Bogenelement mit radiusförmiger Krümmung geformt ist, wobei der Radius in einem Bereich von 100 mm bis 400 mm liegen kann.

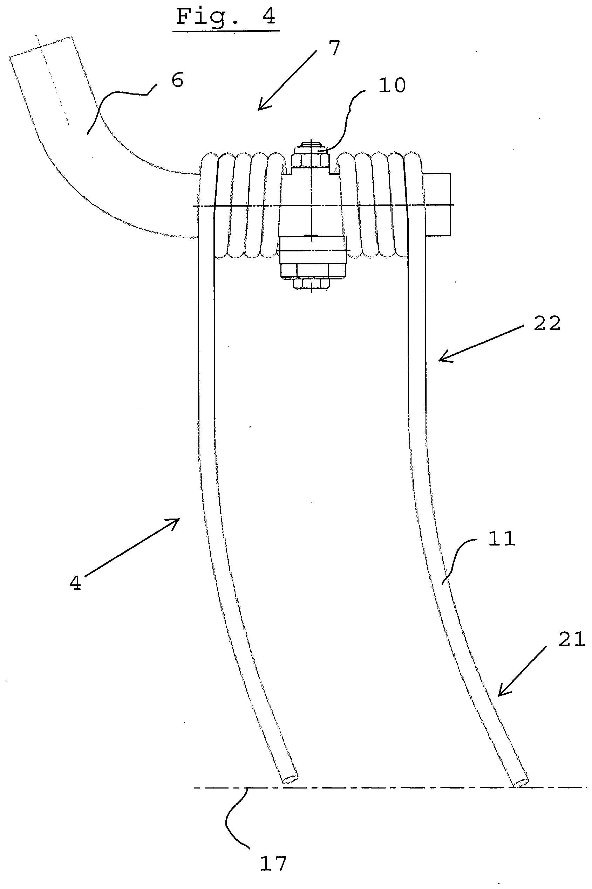

Eine Weiterbildung der Erfindung geht aus der Darstellung nach Fig. 4 hervor, wobei die länglichen Federstangenelemente 11 in Verbindung mit der in Umlaufrichtung der Federzinken 4 gerichteten, bogenförmigen Kontur 12 auch eine bezüglich der Umlaufrichtung U der Federzinken 4 radial nach außen gerichtete Ausformung aufweisen. Diese radial nach außen gerichtete Ausformung überlagert dabei die in Umlaufrichtung U der Federzinken 4 gerichtete, bogenförmige Kontur 12. Aus dieser Weiterbildung ergibt sich, dass beim Zett- oder Wendevorgang der Heuwerbungsmaschine an der Vorderseite des Zettkreisels 3 aufgenommenes Erntegut an der Hinterseite des Zettkreisels 3 leichter wieder abgegeben werden kann. Nach der Darstellung in Fig. 4 kann sich diese radial nach außen gerichtete Ausformung der länglichen Federstangenelemente 11 aus einem oder mehreren Konturabschnitten 21,22 zusammensetzen. Das Ausführungsbeispiel in Fig. 4 zeigt, dass ein dem Erdboden zugewandter Konturabschnitt 21 als geometrisches Bogenelement mit radiusförmiger Krümmung geformt ist, während der dem Zinkenarm 6 zugewandte Konturabschnitt 22 geradlinig gestaltet ist.

## Patentansprüche

1. Heuwerbungsmaschine zum Zetten und Wenden von landwirtschaftlichem Halm- oder Blattgut mit zumindest zwei, an einem in der Arbeits- und Betriebsstellung im Wesentlichen quer zur Fahrt- und Arbeitsrichtung (F) ausgerichteten Maschinenbalken (2) angeordneten Zettkreiseln (3), welche um eine in der Arbeits- und Betriebsstellung unter einem vorbestimmten Winkel zur Vertikalen in Fahrt- und Arbeitsrichtung (F) geneigten Achse umlaufend angetrieben und mit einer Mehrzahl von zumindest in etwa radial ausgerichteten Zinkenarmen (6) versehen sind, wobei die äußeren Enden der Zinkenarme (6) mit Federzinken (4) bestückt sind und jeder Federzinken (4) aus einem, dem äußeren Ende der Zinkenarme (6) räumlich zugeordneten, federnd nachgiebigen Befestigungsabschnitt (7) sowie aus einem der Bearbeitung des landwirtschaftlichen Halm- oder Blattgutes dienenden, zwei längliche, sich in der Arbeits- und Betriebsstellung der Zettkreisel (3) zum Erdboden erstreckende Federstangenelemente (11) aufweisenden Bearbeitungsabschnitt (8) besteht, wobei die beiden länglichen Federstangenelemente (11) bei einer Betrachtung der Federzinken (4), in der der Federzinken (4) in einer vertikalen Projektionsebene in einer radial auf den Zettkreisel (3) ausgerichteten Blickrichtung gezeigt ist, eine bogenförmige Kontur (12) mit zumindest annähernd gleicher Formgebung aufweisen, wobei ein dem Erdboden zugewandtes Ende der länglichen Federstangenelemente (11) in Bezug zur Umlaufrichtung (U) der Federzinken (4) und einer durch einen Mittelpunkt (14) der Querschnittsfläche (15) des Zinkenarmes (6) führenden, vertikalen Bezugstinie (16) mit einem Schnittpunkt (13) dieser Bezugslinie (16) mit dem Erdboden zusammenfällt oder diesem nachgeordnet ist und wobei die bogenförmige Kontur (12) der länglichen Federstangenelemente (11) in radialer Ausrichtung des umlaufenden Federzinkens (4) aus zwei geometrisch gestalteten Konturabschnitten (21,22) besteht, **dadurch gekennzeichnet, dass** der dem Erdboden zugewandte Konturabschnitt (21) als Bogenelement mit radiusförmiger Krümmung und der dem federnd nachgiebigen Befestigungsabschnitt (7) des Federzinkens (4) zugewandte Konturabschnitt (22) als geradlinig ausgebildetes Element ausgeführt ist.

2. Heuwerbungsmaschine nach Anspruch 1, **dadurch gekennzeichnet, dass** die bogenförmige Kontur (12) der länglichen Federstangenelemente (11) eine konkav ausgebildete, In Umlaufrichtung (U) des Federzinkens (4) zeigende Kontaktfläche mit dem Erntegut aufweist.

3. Heuwerbungsmaschine nach Anspruch 1 und 2, **dadurch gekennzeichnet, dass** die bogenförmige Kontur (12) der länglichen Federstangenelemente (11) in Bezug zur Umlaufrichtung (U) des Federzinkens (4) aus zumindest einem geometrisch gestalteten Konturabschnitt (18,19,20) gebildet ist.

4. Heuwerbungsmaschine nach einem der Ansprüche 1 bis 3, **dadurch gekennzeichnet, dass** die bogenförmige Kontur (12) der länglichen Federstangenelemente (11) in einem dem Erdboden zugewandten Konturabschnitt (18) mit der vertikalen Bezugslinie (16) einen Winkel (α) einschließt, welcher Im Bereich zwischen 3° und 45° liegt.

5. Heuwerbungsmaschine nach einem der Ansprüche 1 bis 3, **dadurch gekennzeichnet, dass** die bogenförmige Kontur (12) der länglichen Federstangenelemente (11) in einem, dem federnd nachgiebigen Befestigungsabschnitt (7) des Federzinkens (4) zugewandten Konturabschnitt (19) mit der vertikalen Bezugslinie (16) einen Winkel (β) einschließt, welcher im Bereich oberhalb von 90° liegt.

6. Heuwerbungsmaschine nach Anspruch 1 und 2, **dadurch gekennzeichnet, dass** die bogenförmige Kontur (12) aus einem geometrisch gestalteten Konturabschnitt gebildet ist, dessen Krümmung sich aus einem einzigen Radius ergibt.

7. Heuwerbungsmaschine nach einem der Ansprüche 1 bis 5, **dadurch gekennzeichnet, dass** die bogenförmige Kontur (12) aus drei geometrisch gestalteten Konturabschnitten (18,19,20) besteht, wobei der dem Erdboden zugewandte Konturabschnitt (18) sowie der dem federnd nachgiebigen Befestigungsabschnitt (7) des Federzinkens (4) zugewandte Konturabschnitt (19) als geradlinig ausgebildete Elemente ausgeführt sind und der diese beiden Konturabschnitte (18,19) verbindende dritte Konturabschnitt (20) als Bogenelement mit radiusförmiger Krümmung ausgestaltet ist.

8. Heuwerbungsmaschine nach einem der Ansprüche 1 bis 7, **dadurch gekennzeichnet, dass** der federnd nachgiebige Befestigungsabschnitt (7) des Federzinkens (4) schraubenfederförmige Windungstelle (9) zur Befestigung des Federzinkens (4) an den Zinkenarmen (6) des Zettkreisels (3) enthält.

9. Heuwerbungsmaschine nach Anspruch 8, **dadurch gekennzeichnet, dass** die schraubenfederförmige Windungsteile (9) zur Befestigung des Federzinkens (4) an den Zinkenarmen (6) des Zettkreisels (3) um eine sich in Längsrichtung der Zinkenarme (6) erstreckende Achse verstellbar mit den Zinkenarmen (6) verbindbar sind.

## Claims

1. Haymaking machine for tedding and turning agricultural stalky or leaf crops, comprising at least two rotary tedders (3) which are arranged on a machine beam (2) that is oriented substantially perpendicularly to the travelling and working direction (F) when in the working and operating position, which rotary tedders are rotated about an axis that is inclined towards the vertical at a predefined angle in the travelling and working direction (F), and are provided with a plurality of tine arms (6) that are oriented at least approximately radially, the outer ends of the tine arms (6) being fitted with spring teeth (4), and each spring tooth (4) consisting of a resiliently yielding fastening portion (7) that is spatially associated with the outer end of the tine arms (6), and a processing portion (8) for processing the agricultural stalky or leaf crops that comprises two elongate spring rod elements (11) which extend towards the ground in the working and operating position of the rotary tedders (3), the two elongate spring rod elements (11) having an arc-shaped contour (12) having at least approximately identical shaping in a view of the spring teeth (4) in which the spring teeth (4) are shown in a vertical projection plane in a viewing direction oriented radially towards the rotary tedder (3), an end of the elongate spring rod element (11) which faces the ground coinciding with or following, in relation to the direction of rotation (U) of the spring teeth (4), an intersection point (13) between a vertical grid line (16), which grid line (16) passes through a centre (14) of the cross-sectional area (15) of the tine arm (6) and the ground, and the arc-shaped contour (12) of the elongate spring rod elements (11) consisting of two geometrically formed contour portions (21, 22) in the radial orientation of the rotating spring teeth (4), **characterised in that** the contour portion (21) which faces the ground is designed as an arc element having a radius-like curvature and the contour portion (22) which faces the resiliently yielding fastening portion (7) of the tine arm (4) is designed as a linear element.

2. Haymaking machine according to claim 1, **characterised in that** the arc-shaped contour (12) of the elongate spring rod elements (11) has a concave contact surface for contact with the agricultural crops, which surface faces in the direction of rotation (U) of the spring teeth (4).

3. Haymaking machine according to claim 1 and claim 2, **characterised in that** the arc-shaped contour (12) of the elongate spring rod elements (11) is formed by at least one geometrically designed contour portion (16, 19, 20) in relation to the direction of rotation (U) of the spring teeth (4).

4. Haymaking machine according to any of claims 1 to 3, **characterised in that**, in a contour portion (18) which faces the ground, the arc-shaped contour (12) of the elongate spring rod elements (11) and the vertical grid line (16) form an angle (α) in the range of between 3° and 45°.

5. Haymaking machine according to any of claims 1 to 3, **characterised in that**, in a contour portion (19) which faces the resiliently yielding fastening portion (7) of the spring tooth (4), the arc-shaped contour (12) of the elongate spring rod elements (11) and the vertical grid line (16) form an angle (β) in the range of over 90°.

6. Haymaking machine according to claim 1 and claim 2, **characterised in that** the arc-shaped contour (12) is formed by a geometrically designed contour portion, the curvature of which results from a single radius.

7. Haymaking machine according to any of claims 1 to 5, **characterised in that** the arc-shaped contour (12) consists of three geometrically designed contour portions (18, 19, 20), the contour portion (18) facing the ground and the contour portion (19) facing the resiliently yielding fastening portion (7) of the spring teeth (4) being designed as linear elements and the third contour portion (20), which connects said two contour portions (18, 19), being designed as a curved element having a radius-like curvature.

8. Haymaking machine according to any of claims 1 to 7, **characterised in that** the resiliently yielding fastening element (7) of the spring tooth (4) contains helical spring-like winding members (9) for fastening the spring tooth (4) to the tine arms (6) of the rotary tedder (3).

9. Haymaking machine according to claim 8, **characterised in that** the helical spring-like winding members (9) for fastening the spring tooth (4) to the tine arms (6) of the rotary tedder (3) can be connected to the tine arms (6) so as to be adjustable about an axis extending in the longitudinal direction of the tine arms (6).

## Revendications

1. Machine de fenaison permettant de faner et de retourner des produits agricoles en tiges ou en feuilles ayant au moins deux toupies faneuses (3) montées sur une poutre (2) orientée essentiellement transversalement à la direction de déplacement et de travail (F) dans la position de travail et de fonctionnement, entraînées en rotation autour d'un axe incliné dans la position de travail et d'entraînement d'un angle prédéfini par rapport à la verticale dans la direction de déplacement et de travail (F), et, équipée un ensemble de bras porte griffes (6) orientés au moins essentiellement radialement, les extrémités externes des bras porte griffes (6) étant équipées de griffes élastiques (4) et chaque griffe élastique (4) étant constituée d'un segment de fixation (7) élastiquement flexible associé dans l'espace à l'extrémité externe des bras porte griffes (6) ainsi que d'un segment de travail (8) servant au traitement des produits agricoles en tiges ou en feuilles, comprenant deux éléments de tiges élastiques (11) longitudinaux s'étendant vers le sol dans la position de travail et de fonctionnement de la toupie faneuse (3), les deux éléments de tiges élastiques longitudinaux, ayant, selon une observation de la griffe élastique (4) dans laquelle elle est montrée dans un plan de projection verticale dans une direction de visée dirigée radialement sur la toupie faneuse (3), un contour en forme d'arc (12) ayant au moins approximativement la même forme, l'extrémité tournée vers le sol des éléments de tiges élastiques longitudinaux (11), par rapport à la direction de rotation (U) des grilles élastiques (4) et d'une droite de référence verticale (16) passant par le centre (14) de la surface de section (15) du bras à griffes (6), coïncidant avec le point d'intersection (13) de cette droite de référence (16) avec le sol ou étant située en aval de celui-ci, et le contour en forme d'arc (12) des éléments de tiges longitudinaux (11) étant constitué, dans la direction radiale des griffes élastiques rotatives (4) de deux segments de contour ayant une configuration géométrique (21,22),
**caractérisée en ce que**
le segment de contour (21) tourné vers le sol est réalisé sous la forme d'un élément d'arc ayant un rayon de courbure, et le segment de contour (22) tourné vers le segment de fixation (7) élastiquement flexible de la griffe élastique (4) est réalisé sous la forme d'élément linéaire.

2. Machine de fenaison, conforme à la revendication 1,
**caractérisée en ce que**
le contour en forme d'arc (12) des éléments de tiges élastiques longitudinaux (11) ont une surface de contact avec le produit à récolter concave dirigée dans la direction de rotation (U) des griffes élastiques (4).

3. Machine de fenaison, conforme à la revendication 1 ou 2,
**caractérisée en ce que**
le contour en forme d'arc (12) des éléments de tiges élastiques longitudinaux (11), est formé, par rapport à la direction de rotation (U) des griffes élastiques (4) d'au moins un segment de contour (18, 19, 20) ayant une configuration géométrique.

4. Machine de fenaison, conforme à l'une des revendications 1 à 3,
**caractérisée en ce que**
le contour en forme d'arc (12) des éléments de tiges élastiques longitudinaux (11) définit, avec la droite de référence verticale (16) dans un segment de contour (18) tourné vers le sol, un angle (α) situé dans la plage comprise entre 3° et 45°.

5. Machine de fenaison, conforme à l'une des revendications 1 à 3,
**caractérisée en ce que**
le contour en forme d'arc (12) des éléments de tiges élastiques longitudinaux (11), définit avec la droite de référence verticale (16) dans un segment de contour (19) tourné vers le segment de fixation élastiquement flexible (7) des griffes élastiques (4), un angle (β) qui est situé dans la plage supérieure à 90°.

6. Machine de fenaison, conforme à la revendication 1 ou 2,
**caractérisée en ce que**
le contour en forme d'arc (12) est formé par un segment de contour ayant une configuration géométrique ayant un seul rayon de courbure.

7. Machine de fenaison, conforme à l'une des revendications 1 à 5,
**caractérisée en ce que**
le contour en forme d'arc (12) est constitué de trois segments de contour ayant une configuration géométrique (18, 19, 20), le segment de contour (18) tourné vers le sol, ainsi que le segment de contour (19) tourné vers le segment de fixation (7) élastiquement flexible de la griffe élastique (4) étant réalisés sous la forme d'éléments linéaires, et le troisième segment de contour (20) qui relie ces deux segments de contour (18, 19) étant réalisé sous la forme d'un élément d'arc ayant un rayon de courbure.

8. Machine de fenaison, conforme à l'une des revendications 1 à 7,
**caractérisée en ce que**
le segment de fixation (7) élastiquement flexible de la grille élastique (4) comporte des parties enroulées en forme de ressorts à boudin (9) pour permettre de fixer la grille élastique (4) au bras porte grille (6) de la toupie faneuse (3).

9. Machine de fenaison, conforme à la revendication 8,
**caractérisée en ce que**
les parties enroulées (9) en forme de ressorts à boudin peuvent être reliées aux bras porte griffes (6), pour fixer la griffe élastique (4) sur ces bras porte griffes (6) de la toupie faneuse (3), en pouvant être réglées autour d'un axe s'étendant dans la direction longitudinale des bras porte griffes (6).
